# EUROPEAN PATENT SPECIFICATION

(11) **EP 3 601 413 B1**
(45) Date of publication and mention of the grant of the patent: **21.04.2021**
(21) Application number: 18720361.7
(22) Date of filing: 22.03.2018
(51) Int. Cl.: C08G 73/10

(54) **HIGH HEAT POLYCARBONATE AND POLYETHERIMIDE-SILOXANE COMPOSITIONS, METHODS OF MANUFACTURE, AND ARTICLES THEREOF**
HOCHWÄRMEPOLYCARBONAT- UND POLYETHERIMID-SILOXAN-ZUSAMMENSETZUNGEN, VERFAHREN ZUR HERSTELLUNG UND GEGENSTÄNDE DARAUS
COMPOSITIONS DE POLYCARBONATE ET DE POLYÉTHERIMIDE-SILOXANE À HAUTE TEMPÉRATURE, PROCÉDÉS DE FABRICATION ET ARTICLES ASSOCIÉS

(30) Priority: 24.03.2017 US 201762476030 P
(43) Date of publication of application: 05.02.2020
(73) Proprietor: SHPP Global Technologies B.V., 4612 PX Bergen op Zoom (NL)
(72) Inventor: DAI, Mian, Shanghai 201319 (CN); SHEN, Liang, Shanghai 201319 (CN); SHAN, Wei, Shanghai 201319 (CN); SHEN, Miao, Shanghai 201319 (CN); RAMALINGAM, Hariharan, Bangalore Karnataka 562125 (IN)
(74) Representative: Modiano, Micaela Nadia
(86) International application number: PCT/IB2018/051939
(87) International publication number: WO 2018/172975

(56) References cited:
- EP-A2- 0 617 070
- US-A1- 2012 252 985
- US-A1- 2013 085 240
- US-A1- 2016 004 005

## Description

### BACKGROUND

Copolymers of 2-phenyl-3,3-bis(4-hydroxyphenyl)phthalimidine (also known as N-phenyl phenolphthalein bisphenol (PPPBP) or 3,3-bis(4-hydroxyphenyl)-2-phenylisoindolin-1-one)) and bisphenol A (BPA) have high heat performance compared to other polycarbonates. However, the ductility of such copolymers is not as good as required for some applications. There accordingly remains a need in the art for compositions having good physical and optical properties. EP-A-0617070 discloses compositions containing phthalimidine copolycarbonates with poly(ether-siloxane) copolymers added in a minor amount as flame-retardants.

### SUMMARY

A thermoplastic polymer composition including 10 to 90 wt% of a phthalimidine copolycarbonate having a glass transition temperature of greater than 150°C, preferably greater than 170°C, as measured using differential scanning calorimetry; 10 to 90 wt% of a poly(etherimide-siloxane) copolymer; and 0 to 10 wt% of an additive, as defined in the present claims, wherein the weight percentages are based on the total weight of the composition is provided.

A method of preparing a polymer composition, including extruding, injection molding, or compression molding the provided composition is provided.

An article including the thermoplastic polymer composition is provided.

### BRIEF DESCRIPTION OF THE DRAWINGS

The following Figures are exemplary embodiments.
FIG. 1 is a scanning electron microscope (SEM) picture of a molded bar having the formula of Ex. 9.
FIG. 2 is a SEM picture of a molded bar having the formula of Ex. 2.

### DETAILED DESCRIPTION

The inventors hereof have unexpectedly discovered blends of phthalimidine copolycarbonate and poly(etherimide-siloxane) have good physical properties, such as high glass transition temperatures, transmittance values, Notched Izod Impact strength, MAI ductile percentage, and flame resistance. These described blends can be used in applications such as flexible displays, wearable devices, wire and cable applications, and others.

The poly(etherimide-siloxane) copolymers comprise polyetherimide (PEI) units and polysiloxane units, for example 5 to 1000, or 10 to 500, etherimide units and siloxane units. The polyetherimide units comprise structural units of formula (1) 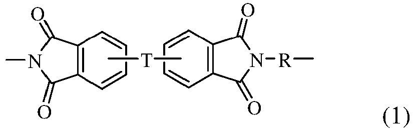 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular one or more of a divalent group of formula (2) 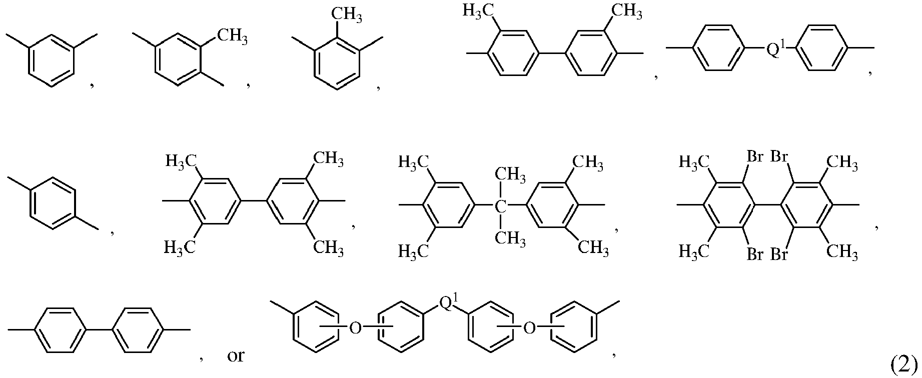 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent or at least 50 mole percent of the R groups contain sulfone groups, and in other embodiments no R groups contain sulfone groups.

Further in formula (1), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (1) is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of formula (3) 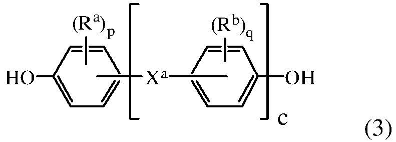 wherein R^{a} and R^{b} can be the same or different and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C6 arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) 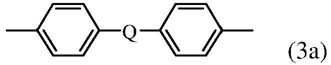 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing and T is -O-Z-O wherein Z is a divalent group of formula (3a) and Q is 2,2-isopropylidene. Alternatively, the polyetherimide can be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some embodiments, the polyetherimide is a copolymer that optionally comprises additional structural imide units that are not polyetherimide units, for example imide units of formula (4) 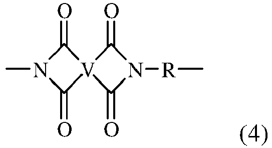 wherein R is as described in formula (1) and each V is the same or different, and is a substituted or unsubstituted C₆₋₂₀ aromatic hydrocarbon group, for example a tetravalent linker of the formulas 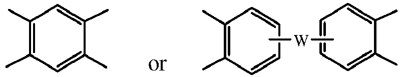 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the polyetherimide.

The polyetherimide units can be prepared by any of the methods well known to those skilled in the art, including the reaction of an aromatic bis(ether anhydride) of formula (5) with an organic diamine of formula (6)

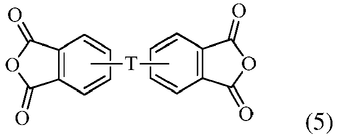

H₂N-R-NH₂ (6)

wherein T and R are defined as described above. Copolymers of the polyetherimides can be manufactured using a combination of an aromatic bis(ether anhydride) of formula (5) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations comprising at least one of the foregoing.

Examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone, and bis(4-aminophenyl) ether. Combinations of these compounds can also be used. In some embodiments the organic diamine is m-phenylenediamine, p-phenylenediamine, sulfonyl dianiline, or a combination comprising one or more of the foregoing.

The siloxane units contain units of formula (7) 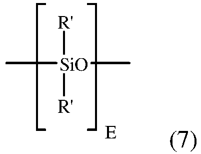 wherein E has an average value of 2 to 100, 2 to 31, 5 to 75, 5 to 60, 5 to 15, or 15 to 40, and each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no bromine or chlorine is present, and in another embodiment no halogens are present. Combinations of the foregoing R groups can be used in the same copolymer. In an embodiment, the polysiloxane blocks comprises R' groups that have minimal hydrocarbon content. In a specific embodiment, an R' group with a minimal hydrocarbon content is a methyl group.

The poly (siloxane-etherimide)s can be formed by polymerization of an aromatic bisanhydride (5) and a diamine component comprising an organic diamine (6) as described above or mixture of diamines, and a polysiloxane diamine of formula (8) 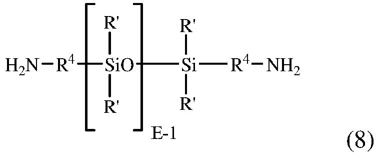 wherein R' and E are as described in formula (7), and each R⁴ is independently a C₂-C₂₀ hydrocarbon moiety, in particular a C₂-C₂₀ arylene, alkylene, or arylenealkylene group. In an embodiment R⁴ is a C₂-C₂₀ alkylene group, specifically a C₂-C₁₀ alkylene group such as propylene, and E has an average value of 5 to 100, 5 to 75, 5 to 60, 5 to 15, or 15 to 40. Procedures for making the polysiloxane diamines of formula (8) are well known in the art.

In some poly(siloxane-etherimide)s the diamine component used in the manufacture of the copolymers can contain 10 to 90 mole percent (mol %), or 20 to 50 mol%, or 25 to 40 mol% of polysiloxane diamine (8) and 10 to 90 mol%, or 50 to 80 mol%, or 60 to 75 mol% of diamine (6), for example as described in US Patent 4,404,350. The diamine components can be physically mixed prior to reaction with the bisanhydride(s), thus forming a substantially random copolymer. Alternatively, block or alternating copolymers can be formed by selective reaction of (6) and (8) with aromatic bis(ether anhydrides (5), to make polyimide blocks that are subsequently reacted together. Thus, the poly(siloxane-imide) copolymer can be a block, random, or graft copolymer. Block poly(siloxane-etherimide) copolymers comprise etherimide blocks and siloxane blocks in the polymer backbone. The etherimide blocks and the siloxane blocks can be present in random order, as blocks (i.e., AABB), alternating (i.e., ABAB), or a combination thereof. Graft poly(siloxane-etherimide) copolymers are non-linear copolymers comprising the siloxane blocks connected to linear or branched polymer backbone comprising etherimide blocks.

Examples of specific poly(siloxane-etherimide)s are described in US Pat. Nos. 4,404,350, 4,808,686 and 4,690,997. In an embodiment, the poly(siloxane-etherimide) has units of formula (9) 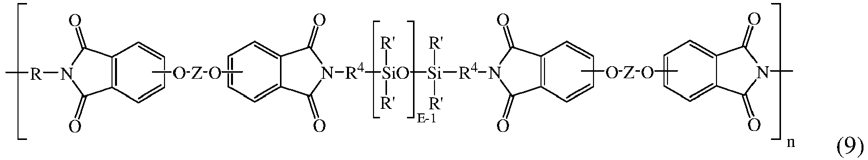 wherein R' and E of the siloxane are as in formula (5), the R and Z of the imide are as in formula (1), R⁴ is the same as R⁴ as in formula (8), and n is an integer from 5 to 100. In a specific embodiment, the R is a phenylene, Z is a residue of bisphenol A, R⁴ is n-propylene, E is 2 to 50, 5 to 30, or 10 to 40, n is 5 to 100, and each R' of the siloxane is methyl.

The relative amount of polysiloxane units and etherimide units in the poly(siloxane-etherimide) depends on the desired properties, and are selected using the guidelines provided herein. In particular, the poly(siloxane-etherimide) copolymer is selected to have a certain average value of E, and is selected and used in amount effective to provide the desired weight percent (wt%) of siloxane units in the thermoplastic composition. In an embodiment the poly(siloxane-etherimide) comprises 5 to 50 wt%, 10 to 40 wt%, or 20 to 35 wt% siloxane units, based on the total weight of the poly(siloxane-etherimide). In some embodiments the polysiloxane block of the copolymer has a number average molecular weight (Mn) of 300 to 3000 grams/mole (Daltons).

The polyetherimides can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide polymer has a weight average molecular weight (Mw) of 1,000 to 150,000 Daltons, or 10,000 to 80,000 Daltons, as measured by gel permeation chromatography (GPC), using polystyrene standards. Such polyetherimide polymers typically have an intrinsic viscosity greater than 0.2 deciliters per gram (dl/g), or, more specifically, 0.35 to 0.7 dl/g as measured in m-cresol at 25 °C. The poly(etherimide-siloxane) copolymer can have a number average molecular weight (Mn) of 5,000 to 50,000 Daltons, or 10,000 to 30,000 Daltons.

The thermoplastic composition can comprise a combination of two or more poly(etherimide-siloxane) copolymers. The copolymers can be used in any proportion. For example, when two copolymers are used the weight ratio of the first copolymer to the second copolymer can be 1:99 to 99:1. Ternary blends and higher are also contemplated.

The phthalimidine copolycarbonate is a copolymer comprising bisphenol carbonate units and phthalimidine carbonate units.

The bisphenol carbonate units are of formula (1) 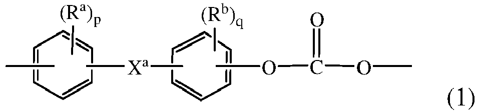 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a bridging group between the two arylene groups, and is a single bond, -O-, -S-, -S(O)-, -S(O)₂-, -C(O)-, a C₁₋₁₁ alkylidene of the formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group. Exemplary X^{a} groups include methylene, ethylidene, neopentylidene, and isopropylidene. The bridging group X^{a} and the carbonate oxygen atoms of each C₆ arylene group can be disposed ortho, meta, or para (specifically para) to each other on the C₆ arylene group.

In a specific embodiment, R^{a} and R^{b} are each independently a C₁₋₃ alkyl group, p and q are each independently 0 to 1, and X^{a} is a single bond, -O-, -S(O)-, -S(O)₂-, -C(O)-, a C₁₋₉ alkylidene of formula -C(R^{c})(R^{d})- wherein R^{c} and R^{d} are each independently hydrogen or C₁₋₈ alkyl, or a group of the formula -C(=R^{e})- wherein R^{e} is a divalent C₁₋₉ hydrocarbon group. In another specific embodiment, R^{a} and R^{b} are each independently a methyl group, p and q are each independently 0 to 1, and X^{a} is a single bond, a C₁₋₇ alkylidene of formula -C(R^{c})(R^{d})- wherein R^{c} and R^{d} are each independently hydrogen or C₁₋₆ alkyl. In an embodiment, p and q is each 1, and R^{a} and R^{b} are each a C₁₋₃ alkyl group, specifically methyl, disposed meta to the oxygen on each ring. The bisphenol carbonate units (1) can be derived from bisphenol A, where p and q are both 0 and X^{a} is isopropylidene.

The polycarbonate units can be produced from the corresponding bisphenol compounds of formula (3) 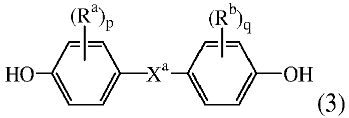 wherein R^{a} and R^{b}, p and q, and X^{a} are the same as in formula (1). Some illustrative examples of specific bisphenol compounds that can be used to produce units (1) include 4,4'-dihydroxybiphenyl, bis(4-hydroxyphenyl)methane, 1,2-bis(4-hydroxyphenyl)ethane, 2-(4-hydroxyphenyl)-2-(3-hydroxyphenyl)propane, 1, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, bis(4-hydroxyphenyl)ether, bis(4-hydroxyphenyl)sulfide, bis(4-hydroxyphenyl)sulfoxide, bis(4-hydroxyphenyl)sulfone, or a combination comprising at least one of the foregoing bisphenolic compounds.

Specific examples of bisphenol compounds that can be used in the production of bisphenol carbonate units (1) include 1,1-bis(4-hydroxyphenyl) methane, 1,1-bis(4-hydroxyphenyl) ethane, 2,2-bis(4-hydroxyphenyl) propane ("bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, and combinations comprising at least one of the foregoing bisphenol compounds.

The phthalimidine carbonate units are of formula (4) 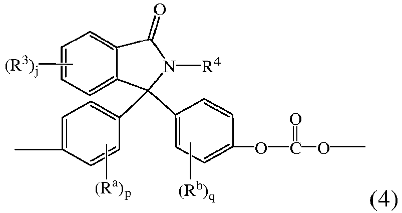 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, R³ is each independently a C₁₋₆ alkyl, j is 0 to 4, and R⁴ is hydrogen, C₁₋₆ alkyl, phenyl optionally substituted with 1 to 5 C₁₋₆ alkyl groups. In an embodiment, R^{a} and R^{b} are each independently C₁₋₃ alkyl. For example, the phthalimidine carbonate units are of formula (4a) 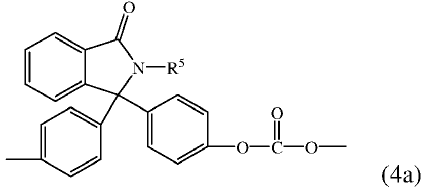 wherein R⁵ is hydrogen, phenyl optionally substituted with up to five C₁₋₆ alkyl groups, or C₁₋₄ alkyl. In an embodiment, R⁵ is hydrogen, phenyl, or methyl. Carbonate units (4c) wherein R⁵ is phenyl can be derived from 2-phenyl-3,3'-bis(4-hydroxy phenyl)phthalimidine (also known as N-phenyl phenolphthalein bisphenol, or "PPPBP") (also known as 3,3-bis(4-hydroxyphenyl)-2-phenylisoindolin-1-one).

The relative mole ratio of first bisphenol carbonate units (1) and phthalimidine carbonate units carbonate units (4) can vary from 99:1 to 1:99, depending on the desired characteristics of the composition, including glass transition temperature ("Tg"), impact strength, ductility, flow, and like considerations. For example, the mole ratio of units (1): units (4) can be from 90:10 to 10:90, from 80:20 to 20:80, from 70:30 to 30:70, or from 60:40 to 40:60. When bisphenol carbonate units (1) units are derived from bisphenol A, the bisphenol A units are generally present in an amount from 50 to 99 mole %, based on the total moles of units in the polycarbonate copolymer. For example, when bisphenol carbonate units (1) are derived from bisphenol A, and bisphenol units (4) are derived from PPPBP, the mole ratio of units (1) to units (4) can be from 99:1 to 50:50, or from 90:10 to 55:45. Examples of such copolycarbonates include copolycarbonates comprising bisphenol A carbonate units and 2-phenyl-3,3'-bis(4-hydroxyphenyl) phthalimidine carbonate units (a PPPBP-BPA copolymer, commercially available under the trade designation XHT from the Innovative Plastics division of SABIC).

The phthalimidine copolycarbonates can have a melt index of 0.1 to 10 grams per minute (g/min), as measured by ASTM D1238 at 340 to 370 °C, using a 6.7 kilogram (kg) weight. In some embodiments, the phthalimidine copolycarbonates have an Mw of 1,000 to 150,000 Daltons, or 10,000 to 80,000 Daltons, or 15,000 to 40,000 Daltons, as measured by GPC, using polystyrene standards.

The thermoplastic compositions can include various other polymers to adjust the properties of the thermoplastic compositions, with the proviso that the other polymers are selected so as to not adversely affect the desired properties of the thermoplastic composition significantly. Other polymers include other polycarbonates, polyimides, polyesters, or an impact modifier such as natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR) silicone elastomers, and elastomer-modified graft copolymers such as styrene-butadiene-styrene (SBS), styrene-butadiene rubber (SBR), styrene-ethylene-butadiene-styrene (SEBS), acrylonitrile-butadiene-styrene (ABS), acrylonitrile-ethylene-propylene-diene-styrene (AES), styrene-isoprene-styrene (SIS), methyl methacrylate-butadiene-styrene (MBS), high rubber graft (HRG), and the like. In general such other polymers provide less than 40 wt.%, less than 30 wt.%, less than 20 wt.%, less than 10 wt.%, or less than 5 wt.% of the total composition. In an embodiment, no other polymers are present. In a specific embodiment, no polymers containing halogen are present in the thermoplastic compositions.

The thermoplastic compositions can include one or more additives ordinarily incorporated into compositions having high heat resistance and high ductility, with the proviso that the additive(s) are selected so as to not adversely affect the desired properties of the thermoplastic composition significantly. Such additives can be mixed at a suitable time during the mixing of the components for forming the composition. Exemplary additives include fillers, catalysts, reinforcing agents, antioxidants, heat stabilizers, light stabilizers, ultraviolet (UV) light absorbing additives, plasticizers, lubricants, mold release agents, antistatic agents, colorants such as such as titanium dioxide, carbon black, and organic dyes, surface effect additives, thermal stabilizers, quenchers, radiation stabilizers, hydro stabilizers, flame retardants, and anti-drip agents. A combination of additives can be used. In general, the additives are used in the amounts generally known to be effective. The total amount of additives (other than any filler or reinforcing agents) is generally 0.01 to 25 parts per hundred parts by the total weight of the polymers in the composition (PHR).

Exemplary antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 PHR.

Exemplary heat stabilizer additives include organophosphites such as triphenyl phosphite, tris-(2,6-dimethylphenyl)phosphite, and tris-(mixed mono-and dinonylphenyl)phosphite; phosphonates such as dimethylbenzene phosphonate, phosphates such as trimethyl phosphate; or combinations comprising at least one of the foregoing heat stabilizers. Heat stabilizers are used in amounts of 0.01 to 0.1 PHR.

Light stabilizers or UV absorbing additives, also referred to as UV stabilizers, can also be used. Light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers.

UV absorbing additives include hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]- 5-(octyloxy)-phenol (CYASORB 1164); 2,2'-(1,4- phenylene)bis(4H-3,1-benzoxazin-4-one) (CYASORB UV-3638); poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octyloxybenzophenone (UVINUL 3008), 6-tert-butyl-2-(5-chloro-2H-benzotriazole-2-yl)-4-methylphenyl (UVINUL 3026), 2,4-di-tert-butyl-6-(5-chloro-2H-benzotriazole-2-yl)-phenol (UVINUL 3027), 2-(2H-benzotriazole-2-yl)-4,6-di-tert-pentylphenol (UVINUL 3028), 2-(2H-benzotriazole-2-yl)-4-(1,1,3,3-tetramethylbutyl)-phenol (UVINUL 3029), 1,3-bis[(2'cyano-3',3'-diphenylacryloyl)oxy] -2,2-bis- {[(2'-cyano-3',3'-diphenylacryloyl)oxy]methyl}-propane (UVINUL 3030), 2-(2H-benzotriazole-2-yl)-4-methylphenol (UVINUL 3033), 2-(2H-benzotriazole-2-yl)-4,6-bis(1-methyl-1-phenyethyl)phenol (UVINUL 3034), ethyl-2-cyano-3,3-diphenylacrylate (UVINUL 3035), (2-ethylhexyl)-2-cyano-3,3-diphenylacrylate (UVINUL 3039), N,N'-bisformyl-N,N'-bis(2,2,6,6-tetramethyl-4-piperidinyl)hexamethylendiamine (UVINUL 4050H), bis-(2,2,6,6-tetramethyl-4-piperidyl)-sebacate (UVINUL 4077H), bis-(1,2,2,6,6-pentamethyl-4-piperdiyl)-sebacate + methyl-(1,2,2,6,6-pentamethyl-4-piperidyl)-sebacate (UVINUL 4092H) 1,3-bis[(2-cyano-3,3-diphenylacryloyl)oxy]-2,2-bis[[(2-cyano-3,3-diphenylacryloyl)oxy]methyl]propane (UVINUL 3030); 2,2'-(1,4-phenylene)bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; TINUVIN 234; nano-size inorganic materials such as titanium oxide, cerium oxide, and zinc oxide, all with particle size less than or equal to 100 nanometers; or the like, or combinations comprising at least one of the foregoing UV absorbers. UV absorbers can be used in amounts of 0.01 to 1 part by weight, based on 100 parts by weight of thermoplastic and impact modifier. UV absorbers that can be particularly useful with the thermoplastic compositions disclosed herein include 2-(2H-benzotriazol-2-yl)-4-(1,1,3,3-tetramethylbutyl)-phenol (e.g., CYASORB 5411 commercially available from Cytec Industries, Inc., Woodland Park, New Jersey) and 2,2'-(1,4- phenylene)bis(4H-3,1-benzoxazin-4-one) (e.g., CYASORB UV- 3638, commercially available from Cytec Industries, Inc., Woodland Park, New Jersey), and combinations comprising at least one of the foregoing. The UV stabilizers can be present in an amount of 0.01 to 1 wt%, specifically, 0.1 to 0.5 wt%, and more specifically, 0.15 to 0.4 wt%, based upon the total weight of the thermoplastic composition.

Plasticizers, lubricants, and/or mold release agents can also be used. There is considerable overlap among these types of materials, which include phthalic acid esters such as dioctyl-4,5-epoxy-hexahydrophthalate; tris-(octoxycarbonylethyl)isocyanurate; tristearin; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a solvent; waxes such as beeswax, montan wax, and paraffin wax. Such materials are used in amounts of 0.1 to 1 PHR.

Methods for forming the thermoplastic compositions can vary. In an embodiment, the polymers are combined (e.g., blended) with any additives (e.g., a mold release agent) such as in a screw-type extruder. The polymers and any additives can be combined in any order, and in form, for example, powder, granular, filamentous, as a masterbatch, and the like. The thermoplastic compositions can be foamed, extruded into a sheet, or optionally pelletized. Methods of foaming a thermoplastic composition using frothing or physical or chemical blowing agents are known and can be used. The pellets can be used for molding into articles, foaming, or they can be used in forming a sheet of the flame retardant thermoplastic composition. In some embodiments, the composition can be extruded (or co-extruded with a coating or other layer) in the form of a sheet and/or can be processed through calendaring rolls to form the desired sheet.

The relative amounts of phthalimidine copolycarbonate and poly(etherimide-siloxane) depends on the particular polymers, and desired properties of the thermoplastic composition, such as impact strength and flow.

The thermoplastic compositions can have good melt viscosities, which aid processing. The thermoplastic compositions can have a melt volume flow rate (MVR, cubic centimeter per 10 minutes (cc/10 min) of 4 to about 30, greater than or equal to 6, greater than or equal to 8, greater than or equal to 10, greater than or equal to 12, greater than or equal to 14, greater than or equal to 16, greater than or equal to 18, or greater than or equal to 20 cc/min, measured at 300°C/1.2 Kg at 360 second dwell according to ISO 1133. The same or similar values can be obtained in articles having a wide range of thicknesses, for example from 0.1 to 10 mm, or 0.5 to 5 mm.

The thermoplastic compositions can further have excellent impact properties, in particular multiaxial impact (MAI) and ductility. The compositions can have a MAI ductile percentage greater than 40%, preferably 100%, measured as per ASTM D3763 at 3.2 mm thickness. The composition can further have a V0 rating at 3.0mm thickness measured as per UL94.

Shaped, formed, or molded articles comprising the thermoplastic compositions are also provided. The thermoplastic compositions can be molded into useful shaped articles by a variety of means such as injection molding, extrusion, rotational molding, blow molding, and thermoforming to form articles. Thus the thermoplastic compositions can be used to form a foamed article, a molded part, a thermoformed article, an extruded film, an extruded sheet, an extruded profile, a fiber, a coating, a coated part, a multilayer sheet, a multilayer film, one or more layers of a multi-layer article (e.g. a cap-layer), a substrate for a coated article, or a substrate for a metallized article.

Illustrative articles include a housing, a cover, a flexible display, a wearable device, an antenna, a camera, an adapter, an electrical component, an electrical device, a wire cable, a connector, an auto lighting bezel, a reflector, a socket, or an autoclave sterilization device. Other illustrative articles include access panels, access doors, air flow regulators air gaspers, air grilles, arm rests, baggage storage doors, balcony components, cabinet walls, ceiling panels, door pulls, door handles, duct housing, enclosures for electronic devices, equipment housings, equipment panels, floor panels, food carts, food trays, galley surfaces, grilles, handles, housings for TVs and displays, light panels, magazine racks, telephone housings, partitions, parts for trolley carts, seat backs, seat components, railing components, seat housings, shelves, side walls, speaker housings, storage compartments, storage housings, toilet seats, tray tables, trays, trim panel, window moldings, window slides, windows, and the like.

Transparent compositions can be produced by manipulation of the process used to manufacture the composition. One example of such a process to produce transparent compositions is described in U.S. Patent Application No. 2003/0032725.

The compositions can have a transmittance greater than 30%, measured as per ASTM D1003-00(B). The compositions can have a single Tg greater than 150°C, measured by dynamic mechanical analysis. The compositions can have a Notched Izod Impact strength greater than 90 J/m or greater than 100 J/m, preferably greater than 150 J/m, measured as per ASTM D256 at 23°C at 3.2 mm thickness.

Flammability tests were performed following the procedure of Underwriter's Laboratory Bulletin 94 entitled "Tests for Flammability of Plastic Materials for Parts in Devices and Appliances" (ISBN 0-7629-0082-2), Fifth Edition, Dated October 29, 1996, incorporating revisions through and including December 12, 2003 (UL94). Several ratings can be applied based on the rate of burning, time to extinguish, ability to resist dripping, and whether or not drips are burning. According to this procedure, materials can be classified as HB, V0, UL94 V1, V2, VA, and/or VB. The compositions can have a V0 rating at 3.0mm thickness measured as per UL94.

Shaped, formed, or molded articles comprising the thermoplastic compositions are also provided. The compositions can be molded into useful shaped articles by a variety of means such as injection molding, extrusion, rotational molding, blow molding and thermoforming to form articles such as, for example, computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In addition, the compositions can be used for other applications as and other devices.

The following examples are provided by way of further illustration, and should not be construed as limiting.

### EXAMPLES

The following materials were used.

**Table 1.**

| Component | Description | Supplier |
|---|---|---|
| PPPBP-BPA | Copolycarbonate comprising 35 mol% PPPBP units, 65 mol% BPA, weight average molecular weight (Mw) = 23,000 to 27,000 g/mol (determined via GPC using bisphenol A homopolycarbonate standards) | SABIC |
| PEI-Si-1 | Poly(etherimide-siloxane) block copolymer comprising structural units derived from m-phenylene diamine, 4,4'-bisphenol A dianhydride (BPADA), and an aminopropyl terminated polydimethylsiloxane containing on average 10 silicon atoms, with 37±2wt% siloxane content; Mw = 35,000 to 40,000 (determined via GPC using bisphenol A homopolycarbonate standards) | SABIC |
| PEI-Si-2 | Poly(etherimide-siloxane) random copolymer comprising structural units derived from m-phenylene diamine, BPADA, and an aminopropyl terminated polydimethylsiloxane containing on average 10 silicon atoms, with 37±2wt% siloxane content | SABIC |
| PEI-Si-3 | Poly(etherimide-siloxane) block copolymer comprising structural units derived from m-phenylene diamine, BPADA, and an aminopropyl terminated polydimethylsiloxane containing on average 10 silicon atoms, with 20±2wt% siloxane content | SABIC |
| PEI-Si-4 | The blends of PEI-Si-1 and PEI-Si-3 bv weight ratio of 1:1 | SABIC |
| PEI | Poly(etherimide) made via reaction of bisphenol-A dianhydride with equimolar amount of m-phenylene diamine, Mw = 31,000 to 35,000 g/mol (determined via GPC using polystyrene standards) | SABIC |
| Stab | Phosphite stabilizer | BASF |
| PETS | Pentaerythritol tetrastearate (mold release agent) | Lonza |
| AO | Hindered phenol anti-oxidant | BASF |

The compositions were prepared by compounding on a 26 millimeter (mm) Coperion W&P ZSK26Mc twin screw extruder. All materials were blended together and fed into the main feeder. The strand of material was cut into pellets and dried for further molding and evaluation. The testing was conducted on pellets and molded parts. Table 2 lists the compounding profile used.

**Table 2.**

| Parameters | Unit | Set Values |
|---|---|---|
| Zone 1 Temp | °C | 50 |
| Zone 2 Temp | °C | 150 |
| Zone 3 Temp | °C | 280 |
| Zone 4 Temp | °C | 300 |
| Zone 5 Temp | °C | 300 |
| Zone 6 Temp | °C | 300 |
| Zone 7 Temp | °C | 300 |
| Zone 8 Temp | °C | 300 |
| Zone 9 Temp | °C | 300 |
| Zone 10 Temp | °C | 300 |
| Zone 11 Temp | °C | 300 |
| Die Temp | °C | 300 |
| Screw speed | Revolutions per minute (rpm) | 500 |
| Throughput | Kilograms per hour (kg/hr) | 30 |

Table 3 lists the injection molding profile used. Molding was on a Fanuc S-2000i molding machine equipped with ASTM tools.

**Table 3.**

| Parameters | Unit | Set Values |
|---|---|---|
| Cnd: Pre-drying time | Hour | 6 |
| Cnd: Pre-drying temp | °C | 135 |
| Hopper temp | °C | 70 |
| Zone 1 temp | °C | 300 |
| Zone 2 temp | °C | 310 |
| Zone 3 temp | °C | 310 |
| Nozzle temp | °C | 310 |
| Mold temp | °C | 90 |
| Screw speed | rpm | 100 |
| Back pressure | Kilogram per square centimeter (kgf/cm²) | 70 |
| Decompression | mm | 3 |

Physical properties were measured using ASTM test methods, as described in Table 4. Unless specified otherwise, the test standards set forth herein are the most recent standard as of the application filing date.

**Table 4.**

| Property | Standard | Conditions | Specimen Type | Units |
|---|---|---|---|---|
| Dynamic mechanical analysis (DMA) | | 23-300°C, 3°C/min, 1Hz | Bar, 63.5 x 12.7 x 3.2 millimeter (mm) | |
| Melt volume rate (MVR) | ASTM D 1238 | Pellet was pre-dried at 135°C for 4 hours. The test condition was 300°C, 2.16 kg with dwell time of 360 seconds. | Pellet | cm³/10 min |
| Notched Izod Impact (NII) | ASTM D256 | 5 foot pounds/foot | Bar, 63.5 x 12.7 x 3.2 mm | Joule/meter (J/m) |
| Vicat Softening Temperature (VIC) | ASTM D1525 | 50 Newtons, 120°C/h | Bar, 63.5 x 12.7 x 3.2 mm | °C |
| Tensile properties | ASTM D638 | 50 mm/min | Bar, 57 x 13.0 x 3.2 x 166 mm | MPa |
| Flexural modulus | ASTM D790 | 2.54 mm/min | Bar, 127 x 12.7 x 3.2 mm | MPa |
| Multiaxial impact (MAI) | ASTM D3763 | 23°C, 3.3 meters/second | 4-inch diameter Dynatup disc, 3.2 mm thick | % |
| Flame retardance | UL 94 | Flame bars were conditioned at 23°C, 50% relative humidity for more than 48 hours before testing | Flame bar, 125 x13x3mm | |
| Yellowness Index (YI) | ASTM D1925 (displayed as YI D1925) | X-rite ColorEye 7000A with specular component and UV light included and calculated for D65 illumination | 1mm | |
| Transmission and Haze | ASTM D1003-00 | HazeGard II equipped with standard D65 lamp | 1 mm | % |
| Heat distortion temperature (HDT) | ASTM D648 | 1.82 megaPascals (MPa) | Bar, 127 x 12.7 x 3.2 mm | °C |

Haze is an indication of wide angle scattering, and is defined as percentage of transmitted light which deviates from the incident beam greater than 2.5 degrees on average. Examples 1-9

The formulations and corresponding properties for the compositions made from PPPBP-BPA copolycarbonate and poly(etherimide-siloxane) copolymer in different ratios are shown in Table 5. The amount of each component is in weight percent. Note Examples 1,2,13,14 and 18 are not inventive.

**Table 5.**

| Component | Unit | Ex. 1* | Ex. 2 | Ex. 3 | Ex. 4 | Ex.5 | Ex.6 | Ex. 7 | Ex. 8 | Ex. 9 | Ex. 10 | Ex. 11 | Ex12 * |
|---|---|---|---|---|---|---|---|---|---|---|---|---|---|
| PPPBP-BPA | % | 99.61 | 97.61 | 94.61 | 89.61 | 84.61 | 79.61 | 74.61 | 49.61 | 24.61 | 84.61 | 69.61 | 74.85 |
| PEI-Si-1 | % | | 2 | 5 | 10 | 15 | 20 | 25 | 50 | 75 | | | |
| PEI-Si-2 | % | | | | | | | | | | 15 | | |
| PEI-Si-3 | % | | | | | | | | | | | 30 | |
| PEI | % | | | | | | | | | | | | 24.95 |
| Stab | % | 0.08 | 0.08 | 0.08 | 0.08 | 0.08 | 0.08 | 0.08 | 0.08 | 0.08 | 0.08 | 0.08 | 0.1 |
| PETS | % | 0.04 | 0.04 | 0.04 | 0.04 | 0.04 | 0.04 | 0.04 | 0.04 | 0.04 | 0.04 | 0.04 | |
| AO | % | 0.27 | 0.27 | 0.27 | 0.27 | 0.27 | 0.27 | 0.27 | 0.27 | 0.27 | 0.27 | 0.27 | 0.1 |
| Tg | °C | 201 | 201.1 | 201.0 | 201.0 | 201 | 200 | 198 | 192 | 182 | 200 | 199 | - |
| MVR | | 10.9 | 7.8 | 7.9 | 8.1 | 8.4 | 9.6 | 9.7 | 10.3 | 6.8 | 9.7 | 8.8 | |
| HDT | °C | 167 | 166 | 165 | 165 | 163 | 159 | 157 | 137 | 82.4 | 159 | 158 | 174 |
| VIC | °C | 189 | | | | 178 | 177 | 171 | 137 | 99.6 | 180 | 179 | - |
| Flexural Modulus | MPa | 2500 | 2487 | 2444 | 2346 | 2210 | 2110 | 2030 | 1580 | 1200 | 2350 | 2440 | 2480 |
| NII, 23°C | J/m | 90.5 | 97.8 | 125.8 | 148.5 | 170 | 186 | 192 | 247 | 389 | 171 | 140 | 78 |
| NII, -30°C | J/m | 84.8 | | | | 123 | 139 | 143 | 163 | 261 | 126 | 111 | - |

| Tensile Modulus | MPa | 2583 | 2558 | 2565 | 2342 | 2265 | 2206 | 2103 | 1645 | 1215 | 2421 | 2498 | 2789 |
|---|---|---|---|---|---|---|---|---|---|---|---|---|---|
| Tensile Strength at Break | MPa | 61.3 | 60 | 58.3 | 55 | 56.5 | 54 | 52.8 | 43.8 | 34.4 | 57.8 | 59.8 | 66.2 |
| Tensile Elongation at Break | % | 14.0 | 15 | 18 | 18 | 14.1 | 12.8 | 20.2 | 29.6 | 45.5 | 18.6 | 16.7 | 25.2 |
| MAI Ductility | % | 0 | | 75 | 90 | 100 | 100 | 100 | 100 | 100 | 40 | | - |
| 94UL at 1.6mm | | | V0 | V0 | V0 | | | | | | | | |
| 94UL at 3.0 mm | | | V0 | V0 | V0 | V0 | V0 | V0 | V0 | V0 | V0 | V0 | - |
| Appearance | | TC | TC | TC | TMB | TMB | TMB | TMB | TMB | TB | TMB | TB | DL |
| Transmittance | % | 89.2 | 83.4 | | | 55.3 | 46.3 | 40.5 | 34.6 | 54.5 | 55.5 | 75.2 | |
| Haze | | 4.4 | 4.9 | | | 54.2 | 76.5 | 87.3 | 74.6 | 8.8 | 71.1 | 5.7 | |
| YI | | 2.9 | 17.34 | | | 47.9 | 57 | 65.8 | 84.5 | 83.4 | 40 | 42.1 | |
| *Comparative | | | | | | | | | | | | | |
| *TC: transparent clear; TMB: translucent milk brown; TB: transparent brown; DL: delamination | | | | | | | | | | | | | |
| Component | | | | Unit | Ex. 1* | Ex. 13 | Ex. 14 | | Ex. 15 | Ex. 16 | Ex. 17 | | Ex. 11 |
| PPPBP-BPA | | | | % | 99.61 | 97.61 | 94.61 | | 89.61 | 84.61 | 79.61 | | 69.61 |
| PEI-Si-3 | | | | % | | 2 | 5 | | 10 | 15 | 20 | | 30 |
| Stab | | | | % | 0.08 | 0.08 | 0.08 | | 0.08 | 0.08 | 0.08 | | 0.08 |
| PETS | | | | % | 0.04 | 0.04 | 0.04 | | 0.04 | 0.04 | 0.04 | | 0.04 |
| AO | | | | % | 0.27 | 0.27 | 0.27 | | 0.27 | 0.27 | 0.27 | | 0.27 |
| Tg | | | | °C | 201 | 200.0 | 200.5 | | 200 | 200 | 199.0 | | 199 |
| MVR | | | | | 10.9 | 11.0 | 10.8 | | 10.1 | 9.8 | 9.2 | | 8.8 |
| HDT | | | | °C | 167 | 165 | 164 | | 161 | 160 | 160 | | 158 |
| NII, 23°C | | | | J/m | 90.5 | 95.9 | 96.2 | | 107.4 | 110.7 | 124.6 | | 140 |
| Tensile Modulus | | | | MPa | 2583 | 2568.5 | 2531.8 | | 2588.5 | 2508 | 2484 | | 2498 |
| Tensile Strength at Break | | | | MPa | 61.3 | 61.1 | 60.9 | | 60.4 | 60.3 | 60.3 | | 59.8 |
| Tensile Elongation at Break | | | | % | 14.0 | 14 | 15 | | 17 | 19 | 23 | | 16.7 |
| MAI Ductility | | | | % | 0 | 90.4 | 91.9 | | 100 | 100 | 100 | | |
| 94UL at 1..6 mm | | | | | | V2 | V1 | | V0 | V0 | V0 | | |
| 94UL at 3.0 mm | | | | | | V1 | V0 | | V0 | V0 | V0 | | V0 |
| Appearance | | | | | TC | TC | TC | | TC | TC | TB | | TB |
| Transmittance | | | | % | 89.2 | 86 | 83 | | 79 | 75 | | | 75.2 |
| Haze | | | | | 4.4 | 4 | 7 | | 16 | 30 | | | 5.7 |
| YI | | | | | 2.9 | 12 | 14 | | 18 | 31 | | | 42.1 |
| *Comparative | | | | | | | | | | | | | |
| *TC: transparent clear; TB: transparent brown | | | | | | | | | | | | | |
| Component | | | | | Unit | Ex.1* | | Ex. 18 | | Ex. 19 | | Ex.20 | |
| PPPBP-BPA | | | | | % | 99.61 | | 94.61 | | 89.61 | | 79.61 | |
| PEI-Si-4 | | | | | | | | 5 | | 10 | | 20 | |
| Stab | | | | | % | 0.08 | | 0.08 | | 0.08 | | 0.08 | |
| PETS | | | | | % | 0.04 | | 0.04 | | 0.04 | | 0.04 | |
| AO | | | | | % | 0.27 | | 0.27 | | 0.27 | | 0.27 | |
| Tg | | | | | °C | 201 | | 199.9 | | 199.5 | | 188.9 | |
| MVR | | | | | | 10.9 | | 9.1 | | 9.4 | | 10.1 | |
| HDT | | | | | °C | 167 | | 164 | | 162 | | 156 | |
| Flexural Modulus | | | | | MPa | 2500 | | 2410 | | 2301 | | 2298 | |
| NII, 23°C | | | | | J/m | 90.5 | | 109.0 | | 153.0 | | 193 | |
| Tensile Modulus | | | | | MPa | 2583 | | 2581 | | 2463 | | 2389 | |
| Tensile Strength at Break | | | | | MPa | 61.3 | | 59.3 | | 58.2 | | 55.0 | |
| Tensile Elongation at Break | | | | | % | 14.0 | | 14 | | 18 | | 20.4 | |
| MAI Ductility | | | | | % | 0 | | 96.2 | | 100 | | 100 | |
| 94UL at 1..6 mm | | | | | | | | V1 | | V0 | | V0 | |
| 94UL at 3.0 mm | | | | | | | | V1 | | V0 | | V0 | |
| Appearance | | | | | | TC | | TC | | TMB | | TMB | |

| | | | | | | | | | | | | | |
|---|---|---|---|---|---|---|---|---|---|---|---|---|---|
| *Comparative *TC: transparent clear; TMB: translucent milk brown | | | | | | | | | | | | | |

Ex. 1 is PPPBP-BPA copolycarbonate alone, used as a comparative sample. PPPBP-BPA copolycarbonate has a glass transition temperature (Tg) above 200°C and a HDT higher than 150°C. However, the impact performance of PPPBP-BPA copolycarbonate is not as high as desired, for example, the NII was only 90.5 J/m.

To improve the impact performance of PPPBP-BPA, poly(etherimide-siloxane) copolymer was added to balance the heat performance and ductility. Ex. 2-6 show the blends of PPPBP-BPA and block poly(etherimide-siloxane) in different ratios. At a poly(etherimide-siloxane) copolymer loading of greater than 15 wt.%, the Tg of the compositions decreases as PPPBP-BPA amount is decreased. The same trend can be observed in other heat performance parameters, such as HDT and VIC. At a poly(etherimide-siloxane) copolymer loading of equal to or less than 15 wt.%, there are no significant change in heat performance. The physical appearance of the pellets/parts can be described as translucent and brown in color. No obvious delamination was observed, except for Ex. 9 with a high loading (75%) of poly(etherimide-siloxane), which shows minor defects around the gate.

The two polymers used in the composition show good miscibility. The flexural modulus and tensile modulus remarkably decrease as the amount of poly(etherimide-siloxane) increases. This indicates the material becomes softer as the amount of poly(etherimide-siloxane) increases. The impact performance of the composition is significantly improved as a function of increasing poly(etherimide-siloxane) content. The ductility of the compositions also appears to increase with increasing polyetherimide-siloxane content.

Ex. 10 uses a random poly(etherimide-siloxane) copolymer. Ex. 11 and 13-17 use a poly(etherimide-siloxane) block copolymer having a different siloxane content than Ex. 9. All of Ex. 10, Ex. 11, and Ex. 13-17 show a good balance of ductility and heat performance.

A combination of different poly(etherimide-siloxane) can be used. Ex. 18-20 use a blend of two different poly(etherimide-siloxane)s. A good balance of ductility and heat performance are also achieved.

The addition of poly(etherimide-siloxane) provides the composition with improved impact performance and ductility, while maintaining relatively good heat performance. For example, Ex. 7 shows a good balance of heat performance and ductility, where the HDT and VIC are greater than 150°C, while the NII at 23°C is greater than 190 J/m. In general, polycarbonate is notch-sensitive, but ductility of Ex. 7 tested by the multi-axial impact test was 100% at room temperature. This is a significant improvement over a composition of PPPBP-BPA copolycarbonate.

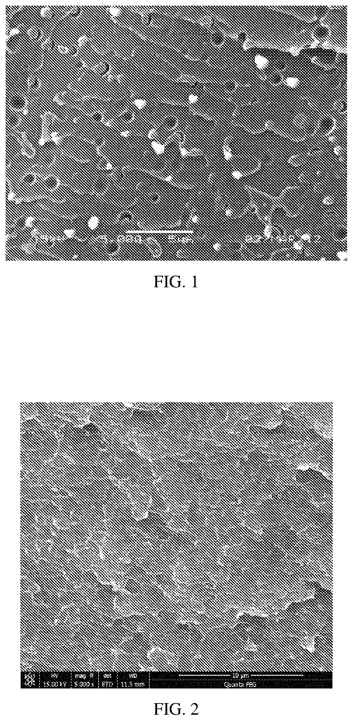

Ex. 12 shows results for PPPBP-BPA and polyetherimide in place of poly(etherimide-siloxane). In comparing Ex. 5 with Ex. 12, Ex. 5 shows much higher impact performance than Ex. 12. As shown in FIG. 1, two phases were observed in parts made from Ex. 12, indicating non-miscibility of the two polymers. In contrast, the composition of Ex. 5 shows good miscibility (see FIG. 2), and no obvious delamination was observed.

The thermoplastic polymer composition, articles prepared therefrom, and methods of manufacturing are further illustrated by the following embodiments, which are nonlimiting.

The singular forms "a," "an," and "the" include plural referents unless the context clearly dictates otherwise. Unless defined otherwise, technical and scientific terms used herein have the same meaning as is commonly understood by one of skill in the art to which this invention belongs. The modifier "about" used in connection with a quantity is inclusive of the stated value and has the meaning dictated by the context (e.g., includes the degree of error associated with measurement of the particular quantity).

The endpoints of all ranges directed to the same component or property are inclusive and independently combinable (e.g., ranges of "less than or equal to 25 wt%, or, more specifically, 5 wt% to 20 wt%," is inclusive of the endpoints and all intermediate values of the ranges of "5 wt% to 25 wt%," etc.).

The suffix "(s)" as used herein is intended to include both the singular and the plural of the term that it modifies, thereby including at least one of that term (e.g., the colorant(s) includes at least one colorants). "Optional" or "optionally" means that the subsequently described event or circumstance can or can not occur, and that the description includes instances where the event occurs and instances where it does not. Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" refers broadly to a substituent comprising carbon and hydrogen, optionally with 1 to 3 heteroatoms, for example, oxygen, nitrogen, halogen, silicon, or sulfur; "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkenyl" refers to a non-aromatic cyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound.

Exemplary groups that can be present on a "substituted" position include, but are not limited to, halogen; cyano; hydroxyl; nitro; azido; alkanoyl (such as a C2-C6 alkanoyl group such as acyl or the like); carboxamido; alkyl groups (typically having 1 to 8 carbon atoms, or 1 to 6 carbon atoms); cycloalkyl groups, alkenyl and alkynyl groups (including groups having at least one unsaturated linkages and from 2 to 8, or 2 to 6 carbon atoms); alkoxy groups having at least one oxygen linkages and from 1 to 8, or from 1 to 6 carbon atoms; aryloxy such as phenoxy; alkylthio groups including those having at least one thioether linkages and from 1 to 8 carbon atoms, or from 1 to 6 carbon atoms; alkylsulfinyl groups including those having at least one sulfinyl linkages and from 1 to 8 carbon atoms, or from 1 to 6 carbon atoms; alkylsulfonyl groups including those having at least one sulfonyl linkages and from 1 to 8 carbon atoms, or from 1 to 6 carbon atoms; aminoalkyl groups including groups having at least one N atoms and from 1 to 8, or from 1 to 6 carbon atoms; aryl having 6 or more carbons and at least one rings, (e.g., phenyl, biphenyl, naphthyl, or the like, each ring either substituted or unsubstituted aromatic); arylalkyl having 1 to 3 separate or fused rings and from 6 to 18 ring carbon atoms, with benzyl being an exemplary arylalkyl group; or arylalkoxy having 1 to 3 separate or fused rings and from 6 to 18 ring carbon atoms, with benzyloxy being an exemplary arylalkoxy group.

## Claims

1. A thermoplastic polymer composition comprising
10 to 90 wt% of a phthalimidine copolycarbonate having a glass transition temperature of greater than 150°C, preferably greater than 170°C, as measured using differential scanning calorimetry;
10 to 90 wt% of a poly(etherimide-siloxane) copolymer; and
0 to 10 wt% of an additive comprising a filler, a catalyst, an antioxidant, a thermal stabilizer, a quencher, a colorant, a mold release agent, a light stabilizer, an ultraviolet light absorbing additive, a plasticizer, a lubricant, an antistatic agent, a flame retardant, an anti-drip agent, a hydrostabilizer, or a combination comprising at least one of the foregoing, wherein the weight percentages are based on the total weight of the composition.

2. The composition of claim 1, wherein the phthalimidine copolycarbonate comprises phthalimidine carbonate units of the formula 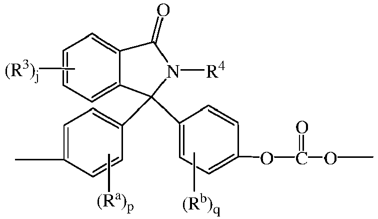 wherein
R^{a} and R^{b} are each independently a C₁₋₁₂ alkyl, C₁₋₁₂ alkenyl, C₃₋₈ cycloalkyl, or C₁₋₁₂ alkoxy,
p and q are each independently 0 to 4,
each R³ is independently a C₁₋₆ alkyl,
j is 0 to 4;
R⁴ is hydrogen, C₁₋₆ alkyl, phenyl optionally substituted with 1 to 5 C₁₋₆ alkyl groups, and
bisphenol carbonate units that are not the same as the phthalimidine carbonate units.

3. The composition of claim 1 or 2, wherein the phthalimidine copolycarbonate comprises phthalimidine carbonate units derived from 2-phenyl-3,3-bis-(4-hydroxyphenyl)phthalimidine and bisphenol carbonate units derived from bisphenol A.

4. The composition of any one or more of the preceding claims, wherein the phthalimidine copolycarbonate comprises 25 to 40 mole percent of phthalimidine carbonate units derived from 2-phenyl-3,3-bis-(4-hydroxyphenyl)phthalimidine and 60 to 75 mole percent of bisphenol carbonate units derived from bisphenol A.

5. The composition of any one or more of the preceding claims, wherein the poly(etherimide-siloxane) copolymer has a siloxane content of less than or equal to 40 weight percent, preferably 20 to 30 weight percent, based on the total weight of the poly(etherimide-siloxane) copolymer.

6. The composition of any one or more of the preceding claims, wherein the poly(etherimide-siloxane) copolymer is a block copolymer or a random copolymer.

7. The composition of any one or more of the preceding claims, wherein the poly(etherimide-siloxane) comprises units of the formula: 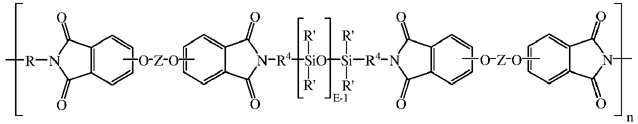 R is phenylene, Z is a residue of bisphenol A, R⁴ is n-propylene, E is 2 to 50, or 5 to 30, or 10 to 40, n is 5 to 100, and each R' of the siloxane is methyl.

8. The composition of any one or more of the preceding claims, comprising 22 to 87 wt%, preferably 24 to 85 wt% of the phthalimidine copolycarbonate and 10 to 80 wt%, preferably 15 to 75 wt% of the poly(etherimide-siloxane) copolymer.

9. The composition of any one or more of the preceding claims, comprising a total of 0.05 to 1.0 wt% of an antioxidant, a mold release agent, a thermal stabilizer, or a combination comprising at least one of the foregoing, based on the total weight of the composition.

10. The composition of any one or more of the preceding claims, wherein one or more of the conditions apply: the composition has a single Tg greater than 150°C, measured by dynamic mechanical analysis;
the composition has a transmittance greater than 30%, measured as per ASTM D1003-00(B);
the composition has a Notched Izod Impact strength greater than 90 J/m, preferably greater than 150 J/m, measured as per ASTM D256 at 23°C at 3.2 mm thickness;
the composition has an MAI ductile percentage greater than 40%, preferably 100%, measured as per ASTM D3763 at 3.2 mm thickness; or
the composition has a V0 rating at 1.6 or 3.0 mm thickness measured as per UL94.

11. The composition of any one or more of the preceding claims, comprising
70 to 85 wt% of the phthalimidine copolycarbonate comprising 25 to 40 mole percent of phthalimidine carbonate units derived from 2-phenyl-3,3-bis-(4-hydroxyphenyl)phthalimidine and 60 to 75 mole percent of bisphenol carbonate units derived from bisphenol A;
15 to 30 wt% of a poly(etherimide-siloxane) comprising units of the formula: 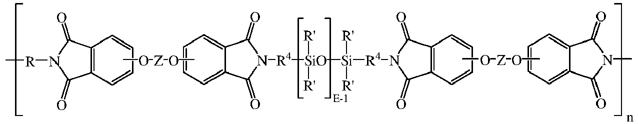 where R is phenylene, Z is a residue of bisphenol A, R⁴ is n-propylene, E is 2 to 50, or 5 to 30, or 10 to 40, n is 5 to 100, and each R' of the siloxane is methyl, wherein the composition has a Notched Izod Impact strength of 100 to 400 J/m, measured as per ASTM D256 at 23°C at 3.2 mm thickness.

12. The composition of any one or more of the preceding claims, wherein the poly(etherimide-siloxane) is poly(etherimide-siloxane) block copolymer comprising structural units derived from m-phenylene diamine, 4,4'-bisphenol A dianhydride (BPADA), and an aminopropyl terminated polydimethylsiloxane containing on average 10 silicon atoms, with 37 ± 2wt% siloxane content; poly(etherimide-siloxane) random copolymer comprising structural units derived from m-phenylene diamine, BPADA, and an aminopropyl terminated polydimethylsiloxane containing on average 10 silicon atoms, with 37 ± 2wt% siloxane content; or poly(etherimide-siloxane) block copolymer comprising structural units derived from m-phenylene diamine, BPADA, and an aminopropyl terminated polydimethylsiloxane containing on average 10 silicon atoms, with 20 ± 2wt% siloxane content, or a combination comprising at least one of the foregoing.

13. The composition of any one or more of the preceding claims, comprising
72 to 76 wt% of the phthalimidine copolycarbonate comprising 35 mole percent of phthalimidine carbonate units derived from 2-phenyl-3,3-bis-(4-hydroxyphenyl)phthalimidine and 65 mole percent of bisphenol carbonate units derived from bisphenol A;
23 to 28 wt% of a poly(etherimide-siloxane) block copolymer comprising structural units derived from m-phenylene diamine, 4,4'-bisphenol A dianhydride (BPADA), and an aminopropyl terminated polydimethylsiloxane containing on average 10 silicon atoms, with 37+2wt% siloxane content, Mw is 35,000 to 40,000 (determined via GPC using bisphenol A homopolycarbonate standards, wherein the composition has a Notched Izod Impact strength of 100 to 400 J/m, measured as per ASTM D256 at 23°C at 3.2 mm thickness; and
0.2 to 0.45 wt% of the additive.

14. An article comprising the polymer composition of any one or more of claims 1 to 13.

15. The article of claim 14, wherein the article is a sheet, a film, a multilayer sheet, a multilayer film, a molded part, an extruded profile, a fiber, a coating, a coated part, a foam, a housing, a cover, a flexible display, a wearable device, an antenna, a camera, an adapter, an electrical component, an electrical device, a wire cable, a connector, an auto lighting bezel, a reflector, a socket, or an autoclave sterilization device.

## Patentansprüche

1. Eine thermoplastische Polymerzusammensetzung, die Folgendes umfasst:
10 bis 90 Gewichtsprozent eines Phthalimidincopolycarbonats mit einer Glasübergangstemperatur von über 150°C, vorzugsweise über 170°C, gemessen durch Differentialscanningkalorimetrie;
10 bis 90 Gewichtsprozent eines Poly(etherimid-siloxan-)Copolymers und
0 bis 10 Gewichtsprozent eines Zusatzstoffs, der einen Füllstoff, einen Katalysator, ein Antioxidans, einen Wärmestabilisator, ein Ablöschmittel, einen Farbstoff, ein Formtrennmittel, einen Lichtstabilisator, einen UV-Licht absorbierenden Zusatzstoff, einen Weichmacher, ein Schmiermittel, ein Antistatikum, ein Flammverzögerungsmittel, ein Antitropfmittel, einen Hydrostabilisator oder eine Kombination umfasst, die mindestens eines der oben Genannten umfasst; wobei die Gewichtsprozentangaben auf dem Gesamtgewicht der Zusammensetzung basieren.

2. Die Zusammensetzung gemäß Anspruch 1, wobei das Phthalimidincopolycarbonat Folgendes umfasst:
Phthalimidincarbonateinheiten mit folgender Formel: 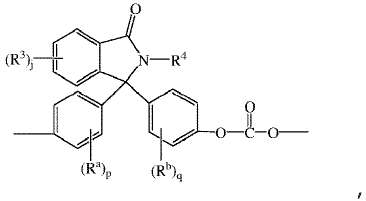 worin
R^{a} und R^{b} jeweils unabhängig ein C₁₋₁₂-Alkyl, C₁₋₁₂-Alkenyl, C₃₋₈-Cycloalkyl oder C₁₋₁₂-Alkoxy sind,
p und q jeweils unabhängig 0 bis 4 sind,
jedes R³ unabhängig ein C₁₋₆-Alkyl ist,
j 0 bis 4 ist;
R⁴ Wasserstoff, C₁₋₆-Alkyl, Phenyl, wahlweise substituiert mit 1 bis 5 C₁₋₆-Alkylgruppen, ist; und
Bisphenolcarbonateinheiten, die nicht mit den Phthalimidincarbonateinheiten identisch sind.

3. Die Zusammensetzung gemäß Anspruch 1 oder 2, wobei das Phthalimidincopolycarbonat Phthalimidincarbonateinheiten umfasst, die abgeleitet sind von 2-Phenyl-3,3-bis-(4-hydroxyphenyl)phthalimidin und Bisphenolcarbonateinheiten, die von Bisphenol A abgeleitet sind.

4. Die Zusammensetzung gemäß einem oder mehreren der obigen Ansprüche, wobei das Phthalimidincopolycarbonat 25 bis 40 Molprozent Phthalimidincarbonateinheiten umfasst, die abgeleitet sind von 2-Phenyl-3,3-bis-(4-hydroxyphenyl)phthalimidin, und 60 bis 75 Molprozent Bisphenolcarbonateinheiten, die von Bisphenol A abgeleitet sind.

5. Die Zusammensetzung gemäß einem beliebigen oder mehreren der obigen Ansprüche, wobei das Poly(etherimid-siloxan)-Copolymer einen Siloxangehalt von weniger als oder gleich 40 Gewichtsprozent, vorzugsweise 20 bis 30 Gewichtsprozent, hat, basierend auf dem Gesamtgewicht des Poly(etherimid-siloxan)-Copolymers.

6. Die Zusammensetzung gemäß einem beliebigen oder mehreren der obigen Ansprüche, wobei das Poly(etherimid-siloxan)-Copolymer ein Blockcopolymer oder ein statistisches Copolymer ist.

7. Die Zusammensetzung gemäß einem beliebigen oder mehreren der obigen Ansprüche, wobei das Poly(etherimid-siloxan) Einheiten mit folgender Formel umfasst: 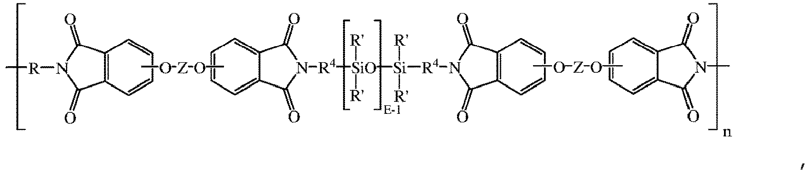 R ist Phenylen, Z ist ein Rest von Bisphenol A, R⁴ ist n-Propylen, E ist 2 bis 50 oder 5 bis 30 oder 10 bis 40, n ist 5 bis 100 und jedes R' des Siloxans ist Methyl.

8. Die Zusammensetzung gemäß einem beliebigen oder mehreren der obigen Ansprüche, die 22 bis 87 Gewichtsprozent, vorzugsweise 24 bis 85 Gewichtsprozent, des Phthalimidincopolycarbonats und 10 bis 80 Gewichtsprozent, vorzugsweise 15 bis 75 Gewichtsprozent, des Poly(etherimid-siloxan)-Copolymers umfasst.

9. Die Zusammensetzung gemäß einem beliebigen oder mehreren der obigen Ansprüche, die insgesamt 0,05 bis 1,0 Gewichtsprozent eines Antioxidans, eines Formtrennmittels, eines Wärmestabilisators oder einer Kombination umfasst, die mindestens eines der oben Genannten umfasst, basierend auf dem Gesamtgewicht der Zusammensetzung.

10. Die Zusammensetzung gemäß einem beliebigen oder mehreren der obigen Ansprüche, wobei eine oder mehrere der folgenden Bedingungen zutreffen: Die Zusammensetzung hat einen Einzel-Tg-Wert von mehr als 150°C, gemessen durch dynamisch-mechanische Analyse;
die Zusammensetzung hat einen Durchlässigkeitsgrad von mehr als 30%, gemessen nach ASTM D1003-00(B);
die Zusammensetzung hat eine Izod-Kerbschlagzähigkeit von mehr als 90 J/m, vorzugsweise mehr als 150 J/m, gemessen nach ASTM D256 bei 23°C und einer Dicke von 3,2 mm;
die Zusammensetzung hat einen zähen MAI-Bruchanteil von mehr als 40%, vorzugsweise 100%, gemessen nach ASTM D3763 bei einer Dicke von 3,2 mm; oder
die Zusammensetzung hat einen V0-Wert bei 1,6 oder 3,0 mm Dicke, gemessen nach UL94.

11. Die Zusammensetzung gemäß einem beliebigen oder mehreren der obigen Ansprüche, die Folgendes umfasst:
70 bis 85 Gewichtsprozent des Phthalimidincopolycarbonats, das Folgendes umfasst: 25 bis 40 Molprozent Phthalimidincarbonateinheiten, abgeleitet von 2-Phenyl-3,3-bis-(4-hydroxyphenyl)phthalimidin, und 60 bis 75 Molprozent Bisphenolcarbonateinheiten, abgeleitet von Bisphenol A;
15 bis 30 Gewichtsprozent eines Poly(etherimid-siloxans), das Einheiten mit folgender Formel umfasst: 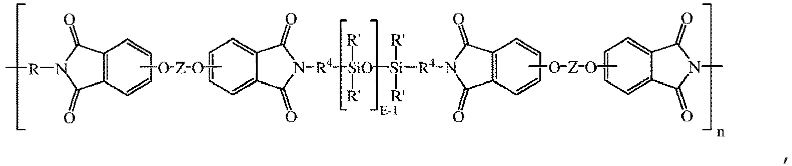 worin R Phenylen ist, Z ein Rest von Bisphenol A ist, R⁴ n-Propylen ist, E 2 bis 50 oder 5 bis 30 oder 10 bis 40 ist, n 5 bis 100 ist und jedes R' des Siloxans Methyl ist, wobei die Zusammensetzung eine Izod-Kerbschlagzähigkeit von 100 bis 400 J/m hat, gemessen nach ASTM D256 bei 23°C und 3,2 mm Dicke.

12. Die Zusammensetzung gemäß einem beliebigen oder mehreren der obigen Ansprüche, wobei das Poly(etherimid-siloxan) Poly(etherimid-siloxan)-Blockcopolymer ist, das Struktureinheiten umfasst, welche abgeleitet sind von m-Phenylendiamin, 4,4'-Bisphenol A-dianhydrid (BPADA) und ein Aminopropyl-terminiertes Polydimethylsiloxan, das durchschnittlich 10 Siliziumatome enthält, mit 37 +/- 2 Gewichtsprozent Siloxangehalt; statistisches Poly(etherimid-siloxan)-Copolymer, das Struktureinheiten umfasst, die abgeleitet sind von m-Phenylendiamin, BPADA und ein Aminopropyl-terminiertes Polydimethylsiloxan, das durchschnittlich 10 Siliziumatome enthält, mit 37 +/- 2 Gewichtsprozent Siloxangehalt; oder Poly(etherimid-siloxan)-Blockcopolymer, das Struktureinheiten umfasst, die abgeleitet sind von m-Phenylendiamin, BPADA und ein Aminopropyl-terminiertes Polydimethylsiloxan, das durchschnittlich 10 Siliziumatome enthält, mit 20 +/- 2 Gewichtsprozent Siloxangehalt; oder eine Kombination, die mindestens eines der oben Genannten umfasst.

13. Die Zusammensetzung gemäß einem beliebigen oder mehreren der obigen Ansprüche, die Folgendes umfasst:
72 bis 76 Gewichtsprozent des Phthalimidincopolycarbonats, das 35 Molprozent Phthalimidincarbonateinheiten umfasst, abgeleitet von 2-Phenyl-3,3-bis-(4-hydroxyphenyl)phthalimidin, und 65 Molprozent Bisphenolcarbonateinheiten, abgeleitet von Bisphenol A;
23 bis 28 Gewichtsprozent eines Poly(etherimid-siloxan)-Blockcopolymers, das Struktureinheiten umfasst, die abgeleitet sind von m-Phenylendiamin, 4,4'-Bisphenol A-dianhydrid (BPADA) und ein Aminopropyl-terminiertes Polydimethylsiloxan, das durchschnittlich 10 Siliziumatome enthält, mit 37 +/- 2 Gewichtsprozent Siloxangehalt; das Mw beträgt 35.000 bis 40.000 (bestimmt durch GPC unter Anwendung von Bisphenol A-Homopolycarbonatstandards; wobei die Zusammensetzung eine Izod-Kerbschlagzähigkeit von 100 bis 400 J/m hat, gemessen nach ASTM D256 bei 23° und 3,2 mm Dicke; und
0,2 bis 0,45 Gewichtsprozent des Zusatzstoffs.

14. Ein Gegenstand, der die Polymerzusammensetzung gemäß einem beliebigen oder mehreren der Ansprüche 1 bis 13 umfasst.

15. Der Gegenstand gemäß Anspruch 14, wobei der Gegenstand eine Lage, eine Folie, eine mehrschichtige Lage, eine mehrschichtige Folie, ein Formteil, ein Strangpressprofil, eine Faser, eine Beschichtung, ein beschichtetes Teil, ein Schaum, ein Gehäuse, eine Abdeckung, ein flexibles Display, ein tragbares Gerät, eine Antenne, eine Kamera, ein Adapter, eine elektrische Komponente, eine elektrische Vorrichtung, ein Drahtseil, ein Verbindungselement, eine Autoscheinwerfereinfassung, ein Reflektor, eine Buchse oder eine Autoklav-Sterilisationsvorrichtung ist.

## Revendications

1. Composition de polymère thermoplastique comprenant
10 à 90 % en poids d'un copolycarbonate de phtalimidine ayant une température de transition vitreuse supérieure à 150°C, de préférence supérieure à 170°C, telle que mesurée par calorimétrie à balayage différentiel ;
10 à 90 % d'un copolymère de poly(étherimide-siloxane) ; et
0 à 10 % en poids d'un additif comprenant une charge, un catalyseur, un antioxydant, un stabilisant thermique, un agent d'inactivation, un colorant, un agent de démoulage, un stabilisant à la lumière, un additif absorbant la lumière ultraviolette, un plastifiant, un lubrifiant, un agent antistatique, un agent ignifugeant, un agent anti-goutte, un hydro-stabilisant, ou une combinaison comprenant au moins l'un des précédents,
dans laquelle les pourcentages en poids sont basés sur le poids total de la composition.

2. Composition selon la revendication 1, dans lequel le copolycarbonate de phtalimidine comprend des motifs carbonate de phtalimidine de formule 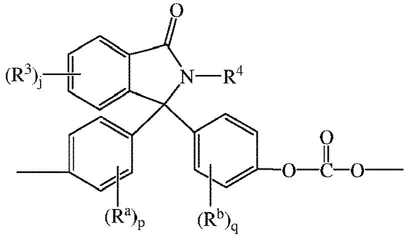 dans laquelle
chacun de R^{a} et R^{b} est indépendamment un alkyle en C₁ à C₁₂, un alcényle en C₁ à C₁₂, cycloalkyle en C₃ à C₈, ou un alcoxy en C₁ à C₁₂,
chacun de p et q vaut indépendamment de 0 à 4,
chaque R³ est indépendamment un alkyle en C₁ à C₆,
j vaut de 0 à 4,
R⁴ est un hydrogène, alkyle en C₁ à C₆, phényle éventuellement substitué par 1 à 5 groupes alkyle en C₁ à C₆, et
des motifs carbonate de bisphénol qui ne sont pas les mêmes que les motifs carbonate de phtalimidine.

3. Composition selon la revendication 1 ou 2, dans laquelle le copolycarbonate de phtalimidine comprend des motifs carbonate de phtalimidine dérivés de 2-phényl-3,3-bis(4-hydroxyphényl)phtalimidine et des motifs carbonate de bisphénol dérivés de bisphénol A.

4. Composition selon l'une quelconque ou plusieurs des revendications précédentes, dans laquelle le copolycarbonate de phtalimidine comprend 25 à 40 % en moles de motifs carbonate de phtalimidine dérivés de 2-phényl-3,3-bis(4-hydroxyphényl)phtalimidine et 60 à 75 % en moles de motifs carbonate de bisphénol dérivés de bisphénol A.

5. Composition selon l'une quelconque ou plusieurs des revendications précédentes, dans laquelle le copolymère de poly(étherimide-siloxane) a une teneur en siloxane inférieure ou égale à 40 % en poids, de préférence de 20 à 30 % en poids, par rapport au poids total du copolymère de poly(étherimide-siloxane).

6. Composition selon l'une quelconque ou plusieurs des revendications précédentes, dans laquelle le copolymère de poly(étherimide-siloxane) est un copolymère séquencé ou un copolymère statistique.

7. Composition selon l'une quelconque ou plusieurs des revendications précédentes, dans laquelle le poly(étherimide-siloxane) comprend des motifs de formule : 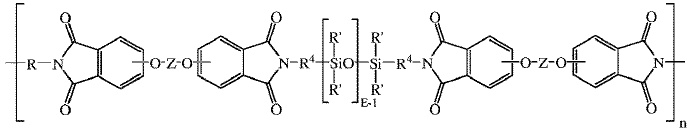 R est le phénylène, Z est un résidu de bisphénol A, R⁴ est le n-propylène, E vaut de 2 à 50, ou de 5 à 30, ou de 10 à 40, n vaut de 5 à 100, et chaque R' du siloxane est un méthyle.

8. Composition selon l'une quelconque ou plusieurs des revendications précédentes, comprenant 22 à 87 % en poids, de préférence 24 à 85 % en poids du copolycarbonate de phtalimidine et 10 à 80 % en poids, de préférence 15 à 75 % en poids du copolymère de poly(étherimide-siloxane).

9. Composition selon l'une quelconque ou plusieurs des revendications précédentes, comprenant au total 0,05 à 1,0 % en poids d'un antioxydant, d'un agent de démoulage, d'un stabilisant thermique, ou d'une combinaison comprenant au moins l'un des précédents, par rapport au poids total de la composition.

10. Composition selon l'une quelconque ou plusieurs des revendications précédentes, dans laquelle une ou plusieurs des conditions s'appliquent :
la composition a une seule Tg supérieure à 150°C, mesurée par analyse mécanique dynamique ;
la composition a un coefficient de transmission supérieur à 30 %, mesuré conformément à la norme ASTM D1003-00(B) ;
la composition a une résistance au choc Izod sur barreau entaillé supérieure à 90 J/m, de préférence supérieure à 150 J/m, mesurée conformément à la norme ASTM D256 à 23°C pour une épaisseur de 3,2 mm;
la composition a un pourcentage ductile MAI supérieur à 40 %, de préférence de 100 %, mesuré conformément à la norme ASTM D3763 pour une épaisseur de 3,2 mm; ou
la composition a une note V0 pour une épaisseur de 1,6 ou 3,0 mm, mesurée conformément à la norme UL94.

11. Composition selon l'une quelconque ou plusieurs des revendications précédentes, comprenant
70 à 85 % en poids du copolycarbonate de phtalimidine comprenant 25 à 40 % en moles de motifs carbonate de phtalimidine dérivés de 2-phényl-3,3-bis(4-hydroxyphényl)phtalimidine et 60 à 75 % en moles de motifs carbonate de bisphénol dérivés de bisphénol A ;
15 à 30 % en poids d'un poly(étherimide-siloxane) comprenant des motifs de formule : 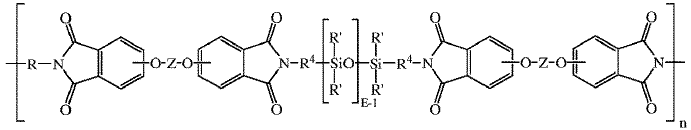 R est le phénylène, Z est un résidu de bisphénol A, R⁴ est le n-propylène, E vaut de 2 à 50, ou de 5 à 30, ou de 10 à 40, n vaut de 5 à 100, et chaque R' du siloxane est un méthyle,
laquelle composition a une résistance au choc Izod sur barreau entaillé de 100 à 400 J/m, mesurée conformément à la norme ASTM D256 à 23°C pour une épaisseur de 3,2 mm;

12. Composition selon l'une quelconque ou plusieurs des revendications précédentes, dans laquelle le poly(étherimide-siloxane) est un copolymère séquencé de poly(étherimide-siloxane) comprenant des motifs structurels dérivés de m-phénylènediamine, de dianhydride de 4,4'-bisphénol A (BPADA), et d'un polydiméthylsiloxane à terminaison aminopropyle contenant en moyenne 10 atomes de silicium, ayant une teneur en siloxane de 37 ± 2 % en poids ; un copolymère statistique de poly(étherimide-siloxane) comprenant des motifs structurels dérivés de m-phénylènediamine, de BPADA, et d'un polydiméthylsiloxane à terminaison aminopropyle contenant en moyenne 10 atomes de silicium, ayant une teneur en siloxane de 37 ± 2 % en poids ; ou un copolymère statistique de poly(étherimide-siloxane) comprenant des motifs structurels dérivés de m-phénylènediamine, de BPADA, et d'un polydiméthylsiloxane à terminaison aminopropyle contenant en moyenne 10 atomes de silicium, ayant une teneur en siloxane de 20 ± 2 % en poids ; ou une combinaison comprenant au moins l'un des précédents.

13. Composition selon l'une quelconque ou plusieurs des revendications précédentes, comprenant
72 à 76 % en poids du copolycarbonate de phtalimidine comprenant 35 % en moles de motifs carbonate de phtalimidine dérivés de 2-phényl-3,3-bis(4-hydroxyphényl)phtalimidine et 65 % en moles de motifs carbonate de bisphénol dérivés de bisphénol A ;
23 à 28 % d'un copolymère séquencé de poly(étherimide-siloxane) comprenant des motifs structurels dérivés de m-phénylènediamine, de dianhydride de 4,4'-bisphénol A (BPADA), et d'un polydiméthylsiloxane à terminaison aminopropyle contenant en moyenne 10 atomes de silicium, ayant une teneur en siloxane de 37 ± 2 % en poids, ayant une Mw de 35 000 à 40 000 (déterminée par GPC utilisant des étalons en homopolycarbonate de bisphénol A),
laquelle composition a une résistance au choc Izod sur barreau entaillé de 100 à 400 J/m, mesurée conformément à la norme ASTM D256 à 23°C pour une épaisseur de 3,2 mm; et
0,2 à 0,45 % en poids de l'additif.

14. Article comprenant la composition de polymère de l'une quelconque ou plusieurs des revendications 1 à 13.

15. Article selon la revendication 14, lequel article est une feuille, un film, une feuille multicouche, un film multicouche, une pièce moulée, un profilé extrudé, une fibre, un revêtement, une pièce revêtue, une mousse, un boîtier, un couvercle, un affichage flexible, un dispositif prêt à porter, une antenne, une caméra, un adaptateur, un composant électrique, un dispositif électrique, un câble, un connecteur, un cadre d'éclairage d'automobile, un réflecteur, une prise, ou un dispositif de stérilisation en autoclave.
